# EUROPEAN PATENT APPLICATION

(11) **EP 4 847 959 A1**
(43) Date of publication of application: **02.12.2026**
(21) Application number: 26180267.2
(22) Date of filing: 21.05.2026
(51) Int. Cl.: G01S 13/46, G01S 7/00, G01S 7/40, G01S 13/87, G01S 13/933, B64U 101/20

(54) **DRONE FOR USE IN CONJUNCTION WITH RADAR DETECTION AND TRACKING SYSTEM**

(30) Priority: 26.05.2025 IL 32112425
(71) Applicant: Elta Systems Ltd., 7710201 Ashdod (IL)
(72) Inventor: STEINMETZ, Josef, 5442303 GIVAT SHMUEL (IL)
(74) Representative: Regimbeau

(57) **Abstract**

A radar system comprising a main radar which transmits first RF signals which impinge upon targets and are reflected back to the main radar as echo signals, a controller/processor; and a hovering or stationary drone, including onboard receiving antenna/e receiving echo signals, from among the echo signals, which arrive from a direction or area of interest, known to the controller/processor, in which targets are to be detected, and onboard transmitting antenna/e. The controller/processor is configured to determine whether each echo signal received by the main radar arrived from the drone or from a target other than the drone. For each echo signal which arrived from the drone, the controller/processor outputs that there is a target in the direction of interest. For each echo signal which did not, the controller/processor outputs that there is a target at a location computed, e.g. by a radar's legacy signal processing, as a function of the direction the echo signal was received from.

## Description

### FIELD OF THIS DISCLOSURE

The present invention relates to sensors and more particularly to radar.

### BACKGROUND

Drones with radar payloads are known.

US10935991 describes scanning and reflecting a radar beam transmitted by a radar transmitter onboard an aerial vehicle where radar reflectors equipped on unmanned aerial vehicles are also provided. The unmanned aerial vehicles may be equipped with a gimbal with one or more axes upon which a radar reflector is mounted. A user positions the unmanned aerial vehicle and radar reflector to target a specific region for radar scanning.

US6914554 describes radar beam steering with remote reflectors/refractors which redirect the transmitted electromagnetic signal in a desired direction. A platform controller communicates with a main controller to maintain alignment between the remote reflector and the antenna.

Examples of state-of-the-art synthetic aperture radar systems are described in IT201600120425, in JPS628081, in US10502821, and in US11557834 to Badichi.

Tethered UAVs are known.

The disclosures of all publications and patent documents mentioned in the specification, and of the publications and patent documents cited therein directly or indirectly, are hereby incorporated by reference, other than subject matter disclaimers or disavowals. If the incorporated material is inconsistent with the express disclosure herein, the interpretation is that the express disclosure herein describes certain embodiments, whereas the incorporated material describes other embodiments. Definition/s within the incorporated material may be regarded as one possible definition for the term/s in question.

### SUMMARY

Certain embodiments provide a drone which may have its own antennae and may have its own amplifier/s but may lack its own transmitter and/or receiver and/or signal processor, where a transmitter and/or receiver and/or or signal processor may be provided by a main radar or ground radar which typically sees the drone. This typically enables the drone to function as a radar despite lacking its own transmitter and/or receiver and/or signal processor. The main or ground radar need not communicate with the drone, but optionally, according to certain embodiments, the drone has communication functionality aboard and the main or ground radar communicates with the drone.

Certain embodiments seek to provide a radar system, whose components can be ground-based or airborne, which protects a specific area by detecting and tracking throughout the entire area without any portion of the area remaining undetected, the radar system thus typically performing detection and/or tracking, throughout that area, that conventional radar are not capable of.

Certain embodiments seek to provide a radar system including a hovering or stationary or static component which facilitates protection of an area and/or detects and/or tracks at least one target in at least one portion of the area, that conventional radar does not detect and/or does not track.

Certain embodiments provide a static e.g. hovering drone which is configured inter alia to operate in search mode e.g. by scanning a space to be protected (e.g. from az_start to az_end, and/or from el_start to el_end).

Certain embodiments provide a static drone that looks at a single AOI (Area of Interest) (until a relevant antenna which may be aboard the drone is rotated to look at another AOI) and is more cost-effective than conventional moveable or moving platforms.

Certain embodiments provide a system which excels well at detecting targets, e.g. small targets, given the system can detect NLOS (no line of sight) targets and/or notch targets and/or can detect at low elevations and/or low heights.

Certain embodiments of the present invention seek to provide circuitry typically comprising at least one hardware processor in communication with at least one memory, with instructions stored in such memory executed by the processor to provide functionalities which are described herein in detail. Any functionality described herein may be firmware-implemented or processor-implemented, as appropriate.

The present invention typically includes at least the following embodiments:
Embodiment 1: A radar system comprising: i. A main radar (e.g. Doppler radar) which typically transmits a first multiplicity of RF signals which impinge upon targets, if any, and may be reflected back to the main radar as a second multiplicity of echo signals; and/or ii. a controller/processor which may be co-located with the radar e.g. may comprise the radar computer programmed to perform functionality/ies described herein; and/or iii. a drone, which may be hovering (velocity = 0 / static), the drone typically including: at least one onboard receiving antenna receiving echo signals, from among the second multiplicity of echo signals, which arrive from a direction or area of interest, known to the controller/processor, in which targets are to be detected, and/or at least one onboard transmitting antenna. Typically, the controller/processor is configured to determine whether each echo signal received by the main radar arrived from the drone or from a target other than the drone, and wherein, for each echo signal which arrives from the drone, the controller/processor outputs that there is a target in the direction of interest, and for each echo signal which did not arrive from the drone the controller/processor outputs that there is a target at a location computed, e.g. by a radar's legacy signal processing, as a function of the direction the echo signal was received from.

The controller/processor may, for example, comprise a radar computer of a legacy radar including a software update configured to determine which echo signals received at the main radar come from the drone and which echo signals come direct from a target other than the drone, and to solve where the target is each time a signal comes from the direction of the drone, e.g. using solution1 and/or solution2 and/or solution3 as described herein.

One onboard transmitting antenna may be directed at the main radar, regardless of the area of interest, and another may be rotatable to enable the other antenna to be directed at various areas of interest.

Optionally, the radar computer uses the known direction to distinguish between echo signals arriving from a target which does not come from the known direction, and echo signals arriving from the drone which do come from this known direction.

Embodiment 2. The system of any embodiment herein wherein the main radar is stationary and the drone is airborne and is hovering at a location, relative to the main radar, which is fixed over time.

Embodiment 3. The system of any embodiment herein wherein the drone comprises a tethered drone which is tethered to a base e.g. ground vehicle, thereby to overcome the drone's otherwise limited flight-time duration.

Embodiment 4. The system of any embodiment herein wherein the controller/processor processes at least one echo arriving from a "notch" target which is moving tangentially relative to the main radar's line of sight.

Embodiment 5. The system of any embodiment herein wherein the transmitting antenna comprises one of the following group: mechanically steered antenna e.g. parabolic (dish) antenna, fixed beam antenna e.g. Yagi-Uda antenna (yagi antenna) or horn antenna which may provide a fixed directional beam, a single-element antenna e.g. monopole antenna, dipole antenna, loop antenna; a helical antenna or a log-periodic antenna.

Embodiment 6. The system of any embodiment herein wherein the antenna receiving the echo signals comprises one of the following group: mechanically steered antenna e.g. parabolic (dish) antenna, fixed beam antenna e.g. Yagi-Uda antenna (yagi antenna) or horn antenna which may provide a fixed directional beam, a single-element antenna e.g. monopole antenna, dipole antenna, loop antenna; a helical antenna or a log-periodic antenna.

Embodiment 7. A cost-effective method for radar operation, the method comprising: i. providing a main radar which typically transmits a first multiplicity of RF signals which impinge upon targets, if any, and are reflected back to the main radar as a second multiplicity of echo signals; and/or ii. providing a hovering drone, including: at least one onboard receiving antenna receiving echo signals, from among the second multiplicity of echo signals, which arrive from a direction of interest, known to the controller/processor in which targets are to be detected, wherein the direction of interest is known to the main radar; and/or at least one onboard transmitting antenna (which may be directed at the main radar); and/or iii. providing a controller/processor configured to determine whether each echo signal received by the main radar arrived from the drone or from a target other than the drone, and wherein, for each echo signal which arrived from the drone the controller/processor outputs that there is a target in the direction of interest, and for each echo signal which did not arrive from the drone the controller/processor outputs that there is a target at a location computed, e.g. by a radar's legacy signal processing, as a function of the direction from which the echo signal was received.

It is appreciated that the antenna receiving echo signals from an area or direction of interest, may be mounted (e.g. on a rotatable mechanical ring) to enable plural areas of interest to be selected (e.g. by rotating the ring) such that, say, during week1, the antenna receives echo signals from an AOI at a first azimuth relative to the main radar, and during, say, week2, the antenna receives echo signals from an AOI at a second azimuth relative to the main radar.

Optionally, the main radar may use the known direction to distinguish between echo signals arriving directly from targets and echo signals arriving from the drone.

It is appreciated that the method is cost-effective inter alia because the system may be deployed in hostile use-cases, such that (only) the drone is at risk (is deployed in a vulnerable location e.g.) as opposed to systems which utilize phased-array antennae in which much more costly equipment is potentially at risk (is deployed in a vulnerable location e.g.). The drone is, typically, a low-cost item relative to many main radar systems, as is evident from the known costs of conventional drones and the known costs of conventional radar systems. Inter alia, the drone typically has a controller/processor only for flight control, and not for processing radar signals, which again reduces cost.

Embodiment 8. The method of any embodiment herein and also comprising transitioning from a first area of interest to be monitored, to a second area of interest to be monitored, by commanding the drone to rotate about its axis.

Embodiment 9. A computer program product, comprising a non-transitory tangible computer readable medium having computer readable program code embodied therein, said computer readable program code adapted to be executed to implement a cost-effective method for radar operation, the method comprising: i. providing a main radar which transmits a first multiplicity of RF signals which impinge upon targets, if any, and are reflected back to the main radar as a second multiplicity of echo signals; and/or ii. providing a hovering drone typically including: at least one onboard receiving antenna receiving echo signals, from among the second multiplicity of echo signals, which arrive from a direction of interest, known to the controller/processor in which targets are to be detected, wherein the direction of interest is known to the main radar; and/or at least one onboard transmitting antenna (which may be directed at the main radar); and/or iii. providing a controller/processor which may be configured to determine whether each echo signal received by the main radar arrived from the drone or from a target other than the drone, and wherein, for each echo signal which arrived from the drone the controller/processor outputs that there is a target in the direction of interest, and for each echo signal which did not arrive from the drone the controller/processor outputs that there is a target at a location computed, e.g. by a radar's legacy signal processing, as a function of the direction from which the echo signal was received.

Also provided, excluding signals, is a computer program comprising computer program code means for performing any of the methods shown and described herein when the program is run on at least one computer; and a computer program product, comprising a typically non-transitory computer-usable or -readable medium e.g. non-transitory computer -usable or -readable storage medium, typically tangible, having a computer readable program code embodied therein, the computer readable program code adapted to be executed to implement any or all of the methods shown and described herein. The operations in accordance with the teachings herein may be performed by at least one computer specially constructed for the desired purposes. or a general purpose computer specially configured for the desired purpose by at least one computer program stored in a typically non-transitory computer readable storage medium. The term "non-transitory" is used herein to exclude transitory, propagating signals or waves, but to otherwise include any volatile or non-volatile computer memory technology suitable to the application.

Any suitable processor/s, display and input means may be used to process, display e.g. on a computer screen or other computer output device, store, and accept information such as information used by or generated by any of the methods and apparatus shown and described herein; the above processor/s, display and input means including computer programs, in accordance with all or any subset of the embodiments of the present invention. Any or all functionalities of the invention shown and described herein, such as but not limited to operations within flowcharts, may be performed by any one or more of at least one conventional personal computer processor, workstation or other programmable device or computer or electronic computing device or processor, either general-purpose or specifically constructed, used for processing; a computer display screen and/or printer and/or speaker for displaying; machine-readable memory such as flash drives, optical disks, CDROMs, DVDs, BluRays, magnetic-optical discs or other discs; RAMs, ROMs, EPROMs, EEPROMs, magnetic or optical or other cards, for storing, and keyboard or mouse for accepting. Modules illustrated and described herein may include any one or combination or plurality of a server, a data processor, a memory/computer storage, a communication interface (wireless (e.g. BLE) or wired (e.g. USB)), and a computer program stored in memory/computer storage.

The term "process" as used above is intended to include any type of computation or manipulation or transformation of data represented as physical, e.g. electronic, phenomena which may occur or reside e.g. within registers and /or memories of at least one computer or processor. Use of nouns in singular form is not intended to be limiting; thus, the term processor is intended to include a plurality of processing units which may be distributed or remote, the term server is intended to include plural typically interconnected modules running on plural respective servers, and so forth.

The above devices may communicate via any conventional wired or wireless digital communication means, e.g. via a wired or cellular telephone network or a computer network such as the Internet.

The apparatus of the present invention may include, according to certain embodiments of the invention, machine readable memory containing or otherwise storing a program of instructions which, when executed by the machine, implements all or any subset of the apparatus, methods, features, and functionalities of the invention shown and described herein. Alternatively, or in addition, the apparatus of the present invention may include, according to certain embodiments of the invention, a program as above which may be written in any conventional programming language, and optionally a machine for executing the program, such as but not limited to a general-purpose computer which may optionally be configured or activated in accordance with the teachings of the present invention. Any of the teachings incorporated herein may, wherever suitable, operate on signals representative of physical objects or substances.

The embodiments referred to above, and other embodiments, are described in detail in the next section.

Any trademark occurring in the text or drawings is the property of its owner and occurs herein merely to explain or illustrate one example of how an embodiment of the invention may be implemented.

Unless stated otherwise, terms such as, "processing", "computing", "estimating", "selecting", "ranking", "grading", "calculating", "determining", "generating", "reassessing", "classifying", "generating", "producing", "stereo-matching", "registering", "detecting", "associating", "superimposing", "obtaining", "providing", "accessing", "setting" or the like, refer to the actions and/or processes of at least one computer/s or computing system/s, or processor/s or similar electronic computing device/s or circuitry, that manipulate and/or transform data which may be represented as physical, such as electronic, quantities e.g. within the computing system's registers and/or memories, and/or may be provided on-the-fly, into other data which may be similarly represented as physical quantities within the computing system's memories, registers, or other such information storage, transmission or display devices, or may be provided to external factors, e.g. via a suitable data network. The term "computer" should be broadly construed to cover any kind of electronic device with data processing capabilities, including, by way of non-limiting example, personal computers, servers, embedded cores, computing system, communication devices, processors (e.g. digital signal processor (DSP), microcontrollers, field programmable gate array (FPGA), application specific integrated circuit (ASIC), etc.) and other electronic computing devices. Any reference to a computer, controller, or processor is intended to include one or more hardware devices e.g. chips, which may be co-located or remote from one another. Any controller or processor may, for example, comprise at least one CPU, DSP, FPGA or ASIC, suitably configured in accordance with the logic and functionalities described herein.

Any feature or logic or functionality described herein may be implemented by processor/s or controller/s configured as per the described feature or logic or functionality, even if the processor/s or controller/s are not specifically illustrated for simplicity. The controller or processor may be implemented in hardware, e.g., using one or more Application-Specific Integrated Circuits (ASICs) or Field-Programmable Gate Arrays (FPGAs), or may comprise a microprocessor that runs suitable software, or a combination of hardware and software elements.

The present invention may be described, merely for clarity, in terms of terminology specific to, or references to, particular programming languages, operating systems, browsers, system versions, individual products, protocols and the like. It will be appreciated that this terminology or such reference/s is intended to convey general principles of operation clearly and briefly, by way of example, and is not intended to limit the scope of the invention solely to a particular programming language, operating system, browser, system version, or individual product or protocol. Nonetheless, the disclosure of the standard or other professional literature defining the programming language, operating system, browser, system version, or individual product or protocol in question, is incorporated by reference herein in its entirety.

Elements separately listed herein need not be distinct components, and alternatively may be the same structure. A statement that an element or feature may exist is intended to include (a) embodiments in which the element or feature exists; (b) embodiments in which the element or feature does not exist; and (c) embodiments in which the element or feature exist selectably, e.g. a user may configure or select whether the element or feature does or does not exist.

Any suitable input device, such as but not limited to a sensor, may be used to generate or otherwise provide information received by the apparatus and methods shown and described herein. Any suitable output, device, or display may be used to display or output information generated by the apparatus and methods shown and described herein. Any suitable processor/s may be employed to compute or generate or route, or otherwise manipulate or process information as described herein and/or to perform functionalities described herein and/or to implement any engine, interface, or other system illustrated or described herein. Any suitable computerized data storage e.g. computer memory may be used to store information received by or generated by the systems shown and described herein. Functionalities shown and described herein may be divided between a server computer and a plurality of client computers. These or any other computerized components shown and described herein may communicate between themselves via a suitable computer network.

The system shown and described herein may include a user interface which may, for example, include all or any subset of: an interactive voice response interface, automated response tool, speech-to-text transcription system, automated digital or electronic interface having interactive visual components, web portal, visual interface loaded as web page/s or screen/s from server/s via communication network/s to a web browser or other application downloaded onto a user's device, automated speech-to-text conversion tool, including a front-end interface portion thereof and back-end logic interacting therewith. Thus, the term user interface or "UI" as used herein includes also the underlying logic which controls the data presented to the user e.g. by the system display and receives and processes data entered by a user e.g. using her or his workstation/device.

### BRIEF DESCRIPTION OF THE DRAWINGS

Fig. 1 is a simplified semi-pictorial semi-block diagram side-view illustration of an embodiment of the invention.
Fig. 2 illustrates an example drone which may be used in Fig. 1, for example.
Figs. 3a - 3b are top views illustrating detection of a notch target (Fig. 3b) which is in "notch" vis a vis the main radar, e.g. using the system of Fig. 1.
Fig. 4 illustrates a variation which may be used in conjunction with the system of Fig. 1, and in which the drone is tethered to a vehicle.
Fig. 5 is a top view of the drone (e.g. of Fig. 1) and its amplifiers A, B, rotating to enable the system of Fig. 1 to transition from monitoring a first area of interest to monitoring a second area of interest.
Fig. 6 shows a multi-sensor embodiment of the invention which employs plural sensors and performs multilateration.
Figs. 7a - 9 illustrate embodiments of the invention which enable the drone direction to be changed. Figs. 7a - 7b specifically show respective top and side views of a platform with prisms on either side of a magnetometer in accordance with certain embodiments.
Fig. 10 is a simplified flowchart illustration of a method performed in accordance with certain embodiments of the invention described herein e.g. in conjunction with all or any subset of the embodiments of Fig. 1 - 8; all or any subset of the illustrated operations may be performed, in any suitable order e.g. as shown.
Fig. 11 is a simplified pictorial illustration of an example multipath system operating in accordance with embodiments of the present invention.
Fig. 12 is a simplified pictorial illustration of a drone in which, in accordance with embodiments of the present invention, one antenna can be rotated to various azimuthal positions (e.g. being mounted on a ring which can be automatically rotated) and another is fixed.

It is appreciated that elements illustrated in more than one drawing, and/or elements in the written description, or even entire embodiments, may still be combined into a single embodiment, except if otherwise specifically clarified herewithin.

Methods and systems included in the scope of the present invention may include some (e.g. any suitable subset) or all of the functional blocks shown in the specifically illustrated implementations by way of example, in any suitable order e.g. as shown.

Computational, functional or logical components described and illustrated herein can be implemented in various forms, for example, as hardware circuits, such as but not limited to custom VLSI circuits or gate arrays, or programmable hardware devices, such as but not limited to FPGAs, or as software program code stored on at least one tangible or intangible computer readable medium and executable by at least one processor, or any suitable combination thereof. A specific functional component may be formed by one particular sequence of software code, or by a plurality of such, which collectively act or behave or act as described herein with reference to the functional component in question. For example, the component may be distributed over several code sequences, such as but not limited to objects, procedures, functions, routines, and programs, and may originate from several computer files which typically operate synergistically.

Each functionality or method herein may be implemented in software (e.g. for execution on suitable processing hardware such as a microprocessor or digital signal processor), firmware, hardware (using any conventional hardware technology such as Integrated Circuit technology) or any combination thereof.

Functionality or operations stipulated as being software-implemented may alternatively be wholly or fully implemented by an equivalent hardware or firmware module, and vice-versa. Firmware implementing functionality described herein, if provided, may be held in any suitable memory device and a suitable processing unit (aka processor) may be configured for executing firmware code. Alternatively, certain embodiments described herein may be implemented partly or exclusively in hardware, in which case all or any subset of the variables, parameters, and computations described herein may be in hardware.

Any module or functionality described herein may comprise a suitably configured hardware component or circuitry. Alternatively, or in addition, modules or functionality described herein may be performed by a general-purpose computer, or more generally by a suitable microprocessor, configured in accordance with methods shown and described herein, or any suitable subset, in any suitable order, of the operations included in such methods, or in accordance with methods known in the art.

Any logical functionality described herein may be implemented as a real time application, if and as appropriate, and which may employ any suitable architectural option, such as but not limited to FPGA, ASIC, or DSP, or any suitable combination thereof.

Any hardware component mentioned herein may in fact include either one or more hardware devices e.g. chips, which may be co-located or remote from one another.

Any method described herein is intended to include within the scope of the embodiments of the present invention also any software or computer program performing all or any subset of the method's operations, including a mobile application, platform, or operating system e.g. as stored in a medium, as well as combining the computer program with a hardware device to perform all or any subset of the operations of the method.

Data can be stored on one or more tangible or intangible computer readable media stored at one or more different locations, different network nodes, or different storage devices at a single node or location.

It is appreciated that any computer data storage technology, including any type of storage or memory and any type of computer components and recording media that retain digital data used for computing for an interval of time, and any type of information retention technology, may be used to store the various data provided and employed herein. Suitable computer data storage or information retention apparatus may include apparatus which is primary, secondary, tertiary or off-line; which is of any type or level or amount or category of volatility, differentiation, mutability, accessibility, addressability, capacity, performance and energy use; and which is based on any suitable technologies such as semiconductor, magnetic, optical, paper, and others.

### DETAILED DESCRIPTION

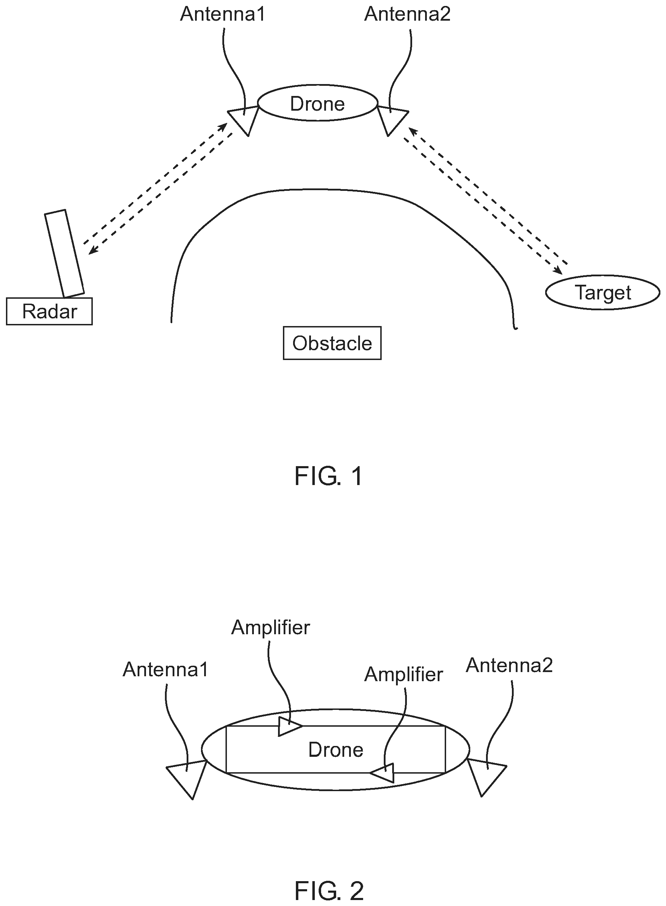

Certain embodiments include a radar system (e.g. of Fig. 1) which typically comprises a transmitter ("radar transmitter") which generates radio or microwave signals which, once sent, bounce off "targets" (e.g. planes, ships, weather patterns), then return to the radar system as " echo signals", and a receiver ("radar receiver") which detects echo signals returning to the antenna, and derives, therefrom, desired information such as all or any subset of the distance, speed, and location of target/s in the radar's environment. This transmitter and receiver define a "main" or "primary" (staring or directional; may or may not be phased array) radar constructed and operative to detect and track targets.

Also provided, according to certain embodiments, is an auxiliary radar aboard a typically hovering or stationary drone which typically focuses the beam of the primary radar to an area of interest, aka AOI.

The radar system also typically comprises a display or output subsystem in data communication with the main radar, where the desired information is presented to an operator or fed to an external system.

Also provided is a drone (aka "moon") with a receiving antenna, an amplifier to amplify signals received, a transmitting antenna, and an amplifier to amplify signals to be transmitted. The receiving antenna is oriented to receive signals from the radar transmitter, and the transmitting antenna is oriented to transmit to targets in an azimuthal area of interest. The receiving antenna is configured and oriented for receiving an RF signal from the main radar and the receiving antenna's amplifier is configured to amplify the typically low power received. Then, the transmitting antenna is configured for transmitting the RF (Radio Frequency) signal as amplified towards an area of interest (AOI) e.g. area to be protected.

Typically, the drone hovers so as to occupy a fixed or static location relative to the main radar, thus is not co-located with the main radar. If the drone, relative to the main radar, is static, the radar computer (RC) can then solve where a target is each time an echo signal arrives from the target (to the drone, and is then "reflected" or transmitted to the main radar).

The drone's transmitting/receiving antenna may comprise a horn-shaped (or parabolic) antenna, which sends out signals in a given direction and captures their echo signals. It is appreciated that, using a horn-shaped antenna, transmission occurs in a specific angle or direction (e.g. in the direction of the main radar), as does reception (e.g. to include a known azimuthal area to be protected). A wider area may be covered (e.g. if the drone moves to a new location rather than hovering) by moving the antenna. It is appreciated that any references herein to horn antennae in the text or drawings is not intended to be limiting, and, alternatively, other types of antennae may be employed.

Typically, the drone's antenna is/are fixed mechanically relative to the drone's body whereas the drone itself can rotate about its own main axis. This enables various azimuthal areas of interest to be provided to the system as a whole, including a first azimuthal area of interest achieved by having the drone hover in a first azimuthal position vis a vis its own main axis, and at least one second azimuthal area of interest achieved by having the drone hover in a second azimuthal position, different from the first, vis a vis its own main axis.

The main radar is typically deployed on the ground, and typically comprises a controller/processor, e.g. radar computer (RC) which is configured to solve where each target is, given some echo signals will be returning from targets as is usual, whereas other echo signals will be returning from the drone.

Typically, drones control their own movement, including how to achieve a given rotation around the vertical axis (yaw), e.g. by adjusting the speed and/or direction of the drone's rotors, which may be set to opposite directions. For example, if a drone's front rotors spin faster (slower) than the drone's rear rotors, the drone will typically rotate clockwise (counterclockwise).

It is appreciated that drones may be autonomous or may be manually controlled, in which case an operator may use a joystick to control yaw (rotation) inter alia.

It is appreciated that providing the drone enables the radar to detect an NLOS (Not in Line Of Sight) target which is not within the radar's line of sight, e.g. due to some obstacle (such as a mountain) between the radar and target, or a low height target which is NLOS due to the earth's curvature.

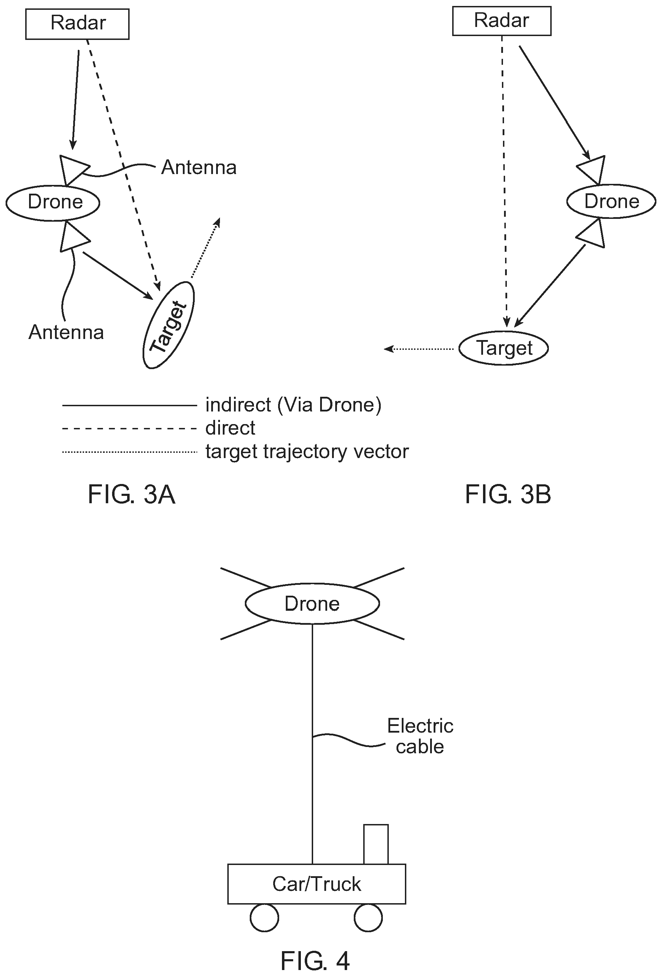

Also however, the configuration of Fig. 1 may be used to detect targets which are in a "notch" state relative to the main radar's Rx/Tx (Reception/Transmission) because they are moving tangentially with respect to the line of sight of the main radar's Rx/Tx (e.g. as shown in Fig. 3b which is a top view of detection of a target in notch state relative to the main radar, whereas in Fig. 3a the target is not in a notch state relative to the main radar). **In** Figs. 3a- 3b, dashed lines are used to denote direct measurement by radar, whereas solid lines denote that the radar is measuring indirectly, via the drone. It is appreciated that a target moving tangentially (perpendicular to the radar line of sight) does not produce a significant Doppler shift. Doppler shifts do occur when the target moves towards or away from the radar, which changes the frequency of the reflected signal (higher frequency if approaching, lower frequency if receding), but a target which moves tangentially to the radar's line of sight yields a relative velocity, between radar and target, of zero along the radar's line of sight. In this situation, there is no change in the frequency of the radar's reflected signal, thus no Doppler shift, thus the target cannot be detected by the radar without the drone and would be in notch state. In contrast, the radar system with the drone can effectively detect a target moving tangentially vis a vis the line of sight of the radar's Tx/Rx because that target is not tangential relative to the drone. Thus, this target would be detected because its signal would be detected by the drone and transmitted to the main radar. If some other target were in a notch state relative to the drone because of tangential motion relative to the drone's line of sight, that target would be detected as well, because its signal would be directly detected by the main radar (although not by the drone).

Is it appreciated that if a target is in a "notch" state relative to the drone radar, that target is typically detected anyhow (by the main radar, typically, without resorting to the drone's radar).

Also, it could be that some targets are detected twice (by the main radar and by the drone's radar, which can be resolved using association algorithms).

It is appreciated that when target tracks are obtained from plural types of sensors, it is known to employ an "association" algorithm to aid in "associating", say, outputs from more than one sensor which result in a single target being tracked by these sensors. Such an association algorithm typically satisfies system requirements, e.g., minimum acceptable probability of correct association and/or maximum elapsed time for association after target detection and/or automatic track initiation, and/or maximum acceptable probability of false track-to-track association.

As shown in Fig. 4, a vehicle may be used to supply power to a "tethered" drone. The tethered drone may be connected via electric cable to any suitable vehicle or base to enable data and/or power to be supplied to the drone, including its amplifier/s.

As described above, the drone is typically static which facilitates or simplifies the main radar computer (RC)'s solution of where a target is when an RF signal from that target arrives at the main radar (via the drone, not directly, thus the RF signal from the drone is sent to the radar). It is appreciated that the vehicle may change its position, in which case the vehicle's new position is then typically reported to the main radar computer, aka RC. The change may, for example, be reported to the radar system automatically (e.g. via communication if available/ encrypted WiFi) to ensure the radar system knows the new location. Alternatively, the change may be manually reported. Inter alia, there may be a pre-assigned list or set of locations, known to the radar system (e.g. to the controller/processor) as locations A, B, for instance, and changes are then reported as being from point A to point B, for example. The new position may, for example, be known by using prior locations where the vehicle has been, and/or the location may be estimated via GPS. An estimated location may then be sent by (cellular e.g.) communication to the main radar's computer which conventionally computes the location as it normally does for primary radar signals sent by the primary radar, and echoing back to the primary radar.

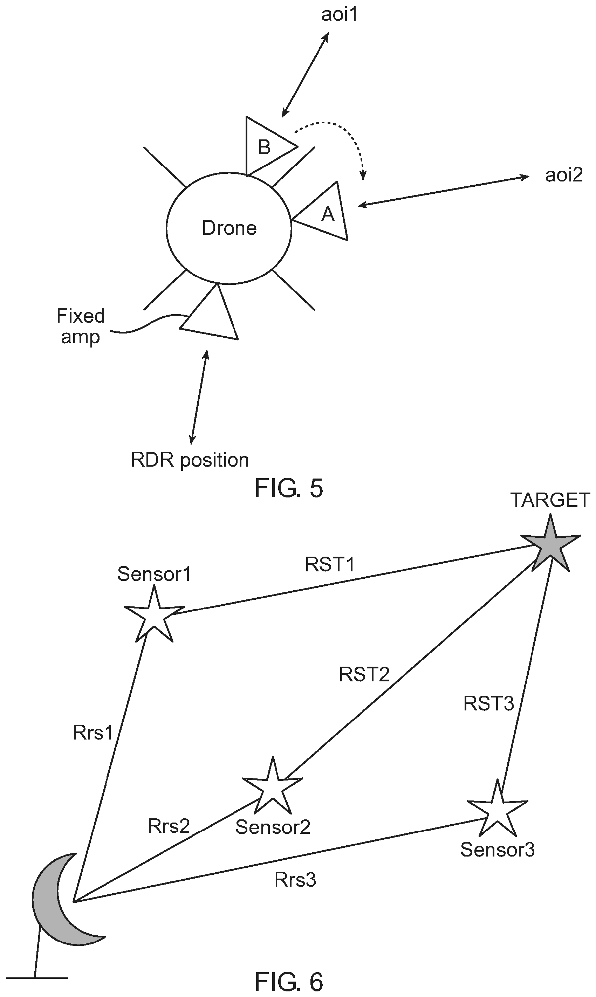

According to certain embodiments, e.g. as shown in Fig. 5, the direction from the drone's antenna to the main radar's line of sight is fixed, whereas the direction from the drone's antenna to the AOI (area of interest e.g. in which targets are sought to be found) is fixed/rotated. This change in the drone's antenna can be made when the drone is on ground. For example, a mechanical ring may be provided in which the antenna can be rotated from one area of interest to another (from AOI1 to AOI2 as shown), e.g. if, on a certain day or week, the mission is to monitor a first area for targets, whereas on a subsequent day or week, the mission is to monitor a second area for targets. In the illustrated embodiment, AOI2 is associated with amplifier at angular position or azimuth A whereas AOI1 is associated with amplifier at angular position or azimuth B, as shown.

When setting the drone with fixed antenna to radar, suitable calibration may be effected, e.g. as described elsewhere herein, to ensure the antenna is quiet in the 3db (say - used as an approximation of radar beamwidth).

It is appreciated that the drone may be used to cost-effectively achieve plural AOIs, e.g., if, on different dates, different areas are deemed to be of interest, by simply rotating the drone each time the area of interest changes, rather than resorting to a costly phased-array antenna. Cost is involved not only in the actual procurement of a phased array antenna, but also, due to its complexity, given such antennae are difficult to maintain and/or difficult to design and/or less robust (are vulnerable to more problems).

Typically, when or after a drone is set, e.g. to cover a given area of interest, the drone may be rotated in small azimuthal steps, e.g. a few degrees each time. Each time the drone is rotated to a new azimuthal position, the drone may send back a signal; the drone may introduce delay or latency (which may be implemented e.g. by providing a suitable length of optical cable).

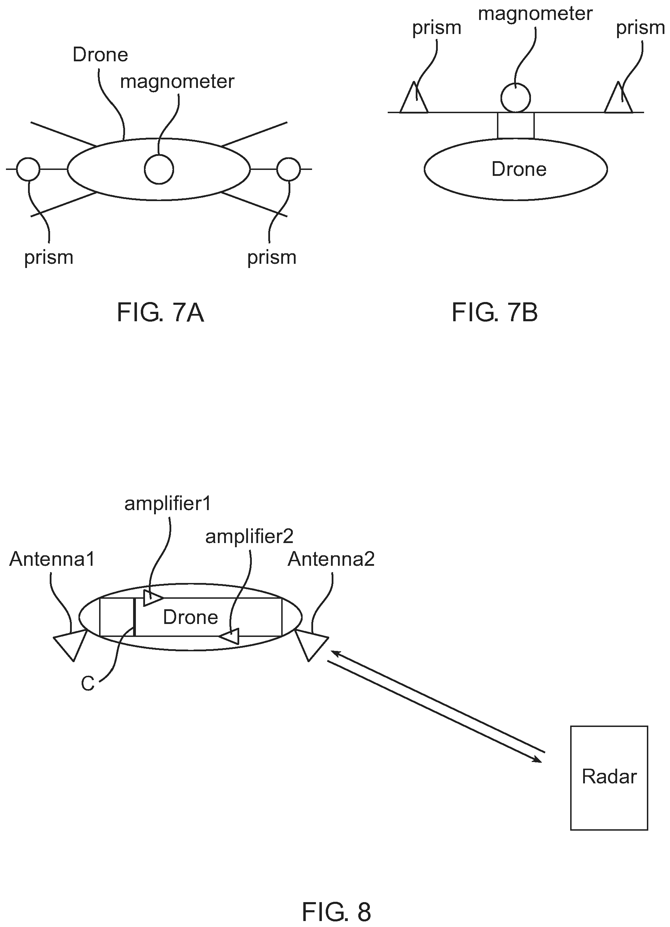

The azimuth whose reflected signal's energy (or SNR aka signal-to-noise-ratio) is highest, may be selected as the azimuth for the drone to radar direction. Alternatively, a prism may be deployed aboard the drone (e.g. as shown in Figs. 7a - 7b), and a vector between radar and drone is found (e.g. as described in the Mihlin patent mentioned elsewhere herein, the disclosure of which is hereby incorporated herein in its entirety) which may be the azimuth for the drone to radar direction.

According to certain embodiments, if the vector is, say 5 degrees from north, then each echo signal arriving at the main radar from the drone rather than directly from the target, may be deemed to be located at 5 degrees to north.

Typically, the radar system tracks targets by performing all or any subset of the following operations, suitably ordered e.g. as shown:
a. determines whether each echo signal received by the main radar arrived from the drone or from a target other than the drone.
b. for each echo signal which arrives from the drone, the controller/processor outputs that there is a target in the direction of interest.
c. in contrast, for each echo signal which did not arrive from the drone. the controller/processor outputs that there is a target at a location computed, e.g. by a radar's legacy signal processing, as a function of the direction the echo signal was received from.

Any suitable method may be employed in operation (a) to determine whether each echo signal arrived from the drone or from a target other than the drone. For example (solution1 aka embodimentA), the main radar may always transmit in the drone's direction in frequency F. Eventually the drone may change the frequency. The drone may include an amplifier and/or antenna and/or a component that converts/changes frequency (e.g. means carrier frequency). Consequently, any echo in frequency F that returns is known to have come from the drone, and any echo in any frequency other than F, is known to have come from a target other than a drone.

Alternatively (solution2 aka embodimentB) the drone's azimuthal position may be known, and when energy is received from that direction i.e. from the drone, a "fictional" or artificial delay (which corresponds to a target which is out of range/greater than the target's radar cross-section) may be added. For example, "fictional" or artificial delay (which may correspond to a target which is out of range/greater than the target's radar cross-section) may be added, to energy received from that direction i.e. from the drone.

Typically, the radar knows the drone's location, as well as the artificial delay the drone uses or induces. If, for example, the max range of radar is 70[km] (e.g. for a certain class of targets which have certain radar cross-sections), and the artificial delay (equivalent to, or converted to, range) is known to be 100[km], then a target which, considering its delay, was detected at 140[km] (i.e. larger than 70 km) means the signal has come from the drone, hence the range is artificial or fictional, thus the known value of 100[km] has to be reduced or subtracted yielding that the target is actually at 140 - 100 = 40[km]. It is appreciated that here and elsewhere the specific numerical values are not intended to be limiting.

Any suitable implementation may be employed to generate delay. For example, there may be a cable in the repeater, such that when an RF signal propagates or is expanded through the cable, it is delayed.

It is appreciated that any suitable method may be used to find a value (latency) to use as a fictional delay. This fictional delay is typically less than the (typically limited) amount of time that the main radar is programmed to devote to "watching" a given direction of the AOI b. The fictional delay is typically not equal to, e.g. far from, the actual delay characterizing echo signals bounding off actual targets. It is appreciated that the amount of time a main radar "watches" this direction, is typically stipulated in the main radar's specification as a parameter.

Alternatively, according to "solution3" aka embodimentC, transmissions back to the main radar use a frequency that the main radar never uses or cannot use, e.g. as described above, thus any echo in that frequency which reaches the main radar, arrived from the drone whereas any echo in any other frequency which comes back to the main radar, clearly came directly from a target and not from the drone.

It is appreciated that receipt of an RF signal and, before transmitting the signal, delaying and/or changing frequency thereof e.g. to a frequency that the main radar never uses or cannot use) enables solution 1 and/or solution2 and/or solution3 to be employed, including discrimination of echo signals from the drone vs. direct from targets, both on the basis of time (delay) and on the basis of frequency. In this embodiment, any echo in that frequency which reaches the main radar, arrived from the the drone, whereas any echo in any other frequency which comes back to the main radar, clearly came directly from a target and not from the drone.

A frequency shift may be used to mark or indicate that the signal is from the drone (e.g. from a target whose echo reached the drone) and not directly from a real target (target other than the drone). However, this is but one possible method for differentiating signals arriving directly from targets, from signals arriving via the drone. Another option is to use delay (e.g. introduce artificial delay) in the repeater, so that the target has "virtual (or fictional or artificial) range" which typically comprises the target's real_range + (fictional or artificial delay*lightVelocity/2). For example, if the main radar detects (certain targets) up to 50[km], a virtual target may be defined whose virtual range is far greater than 50[km], e.g. 55 or 65 or 75 km or 750 km or 7500 km or more.

It is appreciated that it is possible to derive, from the size and/or velocity and/or RCS of a target , what target it is. If a radio signal is received and the main radar computer identifies, due to the latency of the error signal, that this radio signal seems to be arriving from a target 75 km from the target, the main radar computer is configured to recognize that in fact, this is a target arriving from the drone.

The time T_D that radar is "watching" this direction is limited. Thus, typically, the virtual range is selected, so that the time that would be required for a radio signal to travel to and from this virtual target, does not exceed T_D. This embodiment is suitable, for example, for use-cases in which the time required to provide this delay does not impede the radar system's functionality.

The main radar system, when monitoring for targets, is typically operative, e.g. selectably, either in search mode or in track mode. Initially, the main radar often works in "Search Mode", performing a wide-angle scan, to identify the presence and approximate location of various targets. The radar beam typically moves or sweeps systematically across the entire region in a suitable pattern (e.g., using a rotating or mechanically moving antenna for rotating or scanning). Once putative target/s are detected, the main radar may switch to track mode to follow at least one individual target's movement and/or behavior at higher accuracy, relative to search mode accuracy, rather than scanning the entire area. Thus, in track mode, the main radar system typically updates each individual target's position/velocity/ trajectory repeatedly e.g. continuously, typically in real-time or near-real time. The main radar may switch between the two modes, depending on current operational requirements (e.g., searching for new targets versus tracking targets already found).

Reference is now made to Fig. 6 which is an example embodiment which involves multilateration of a target to determine the target's position, e.g. by measuring its distance from multiple radar stations at different typically fixed known locations, using measurement of distances (ranges) to the target from at least three separate points, as opposed to triangulation, which measures angles.

The term "multilateration" as used herein is intended to include any use of a mobile entity aka receiver to measure signals transmitted from plural sites at fixed, known positions, e.g. as shown in Fig. 6. Typically, TDOA (Time Difference of Arrival) of the signals at the receiver(s) allows the receiver to be localized. For example, given a pair of transmission sites, there is a hyperbolic curve upon which the receiver could lie for any specific Time Difference of Arrival aka TDOA pairs. Once a third transmission site is added, the hyperbolic curve is reduced to but two possible points of location, one of which is typically improbable, and/or, adding a fourth transmission site enables the receiver's position to be computed. The fixed sites may emit a pulse signal concurrently, but on separate frequencies, to avoid mutual interference. The TDOA at the receiver may be measured, and this measurement may be used to compute the receiver position. However, in practice, the implementation of multilateration in operational systems requires somewhat more complex transmission strategies. Time Difference of Arrival (TDOA) can be used when a signal from the receiver is measured at plural known, fixed locations, or signals from plural fixed locations may be measured by a (single e.g.) mobile receiver.

In the embodiment of Fig. 6, typically, the multiple radar stations send out radar signals and measure the time required for a signal to reflect off the target and return to the station. The time of flight of the radar signal may be used to compute distance (range) to the target, using the speed of light (at which the radio signals travel) to derive distance from time, yielding plural distances to the target from each radar station (plural range values) from plural known locations respectively. Considering each radar station as defining a sphere, with the sphere's radius being the distance or range to the target, target location may then be determined to lie at the point where these spheres intersect, enabling target coordinates to be derived e.g. by solving a system of equations that represent the spheres.

For example, plural e.g. 3-4 drones and a single sensor (e.g. radar) may be used, instead of 3- 4 radar stations. The drones need not to be synchronized, but the radar stations are typically synchronized, thus the beam "sees" all the drones at the same time, and thus all the sensors, as if they were synchronized.

It is appreciated that when localizing a target, according to certain embodiments, plural sensors (e.g. radar) or drones may be employed, to enable triangulation to be used so as to more accurately estimate target location. When this is done, all sensors are typically synchronized to a single accurate clock, otherwise estimation accuracy decreases, since deviation of one sensor (e.g. radar) in time relative to another yields an error, simply due to the respective sensors' clocks' shift. Typically, e.g. as shown in Fig. 6, all drones are illuminated simultaneously by a single radar, thus obviating any need for synchronization.

Thus assuming N sensors (I = 1, ..N) are deployed aboard N drones respectively, the radar-sensor ranges Rrs(i) for the i'th drone are known (since the locations of the drones are known optionally, each time drone location changes, an operator enters the desired drone location and automatic steering leads the drone to there and/or the operator brings the drone to the location and the system detects the final drone location.

Typically, for the measured range: Rmeasured(i) = Rrs(i) + Rst(i) , when i=1,2,3 where Rrs is range of radar-sensor for the i 'th sensor (e.g. radar) and Rst is range sensor-target for the i 'th sensor. Thus, for any drone or sensor: $Rst \left(i\right) = Rmeasured \left(i\right) - Rrs \left(i\right)$ From Rst(i), the target location may be estimated e.g. as described above.

A method for alignment or calibration of the drone's antenna vis a vis the main radar is now described with reference to Figs. 7a- 8.

Alignment of drone to radar may use a theodolite (or range-finder) as reference to the target instead of GPS, e.g. as described in the co-owned Mihlin patent document discussed in detail below, whose disclosure is hereby incorporated herein in its entirety, by reference. The drone may be used to replace the platform mast (e.g. Mihlin's "rotatable support 11").

On the platform or drone, e.g. as shown in Figs. 7a - 7b, a magnetometer or magnetic compass may be provided, as well as a pair of prisms on either side (left and right) which aid to determine the direction of the horn which is set on a mast which may bear a repeater and a Tx/Rx antenna e.g. horn.

According to certain embodiments, drone-to-radar alignment ensures that the main radar transmits to the horn on the mast, by ensuring the main radar is directed toward the mast, and that the horn is directed to the main radar. Typically, alignment includes two phases:
Phase a. Direct radar to mast e.g. by setting the theodolite in the vicinity of the main radar (e.g. 100m away, depending on the Theodolilte performance specification), computing the vector of the theodolite to the mast, computing the theodolite-radar vector and deriving the radar-mast vector, then directing the main radar to the mast.
Phase b. Direct horn to radar e.g. by using the theodolite to compute the vectors to the prisms on the mast, which then enables the vector of the horn to be determined or established or computerized, e.g. as described herein. Accordingly, the horn may then be directed to the main radar by correcting the horn's directionality to match the horn vector using the main radar mast (by rotating the drone e.g.). The methods of the Mihlin patent, which is hereby incorporated by reference in its entirety, may be used to implement phase B (e.g. to compute by how many radians or degrees to rotate the drone).Another option for phase b, is to use the magnetic compass aka magnetometer of Figs. 7a-b to direct the horn to the main radar. However, since the magnetic compass' bias is relatively large, using its measurement to align typically includes correcting its bias e.g. as described in the Mihlin patent, which is hereby incorporated by reference in its entirety.

Another way to align the drone to the main radar is by use of radar samples. For example, alignment may include transmitting from radar to drone, then sending back the signal to the main radar. This may be done for various angles, as the drone is rotated; for each such angular orientation of the drone, the SNR received in the main radar is measured. Then, the angular orientation whose SNR is highest is selected as the angular orientation for the drone. For this embodiment, instead of using the configuration of channel shown in Fig. 2, the configuration shown in Fig. 8 is used. As indicated at "C" in Fig. 8, the channel is typically closed so that the signal is not getting out, and instead is in the same direction.

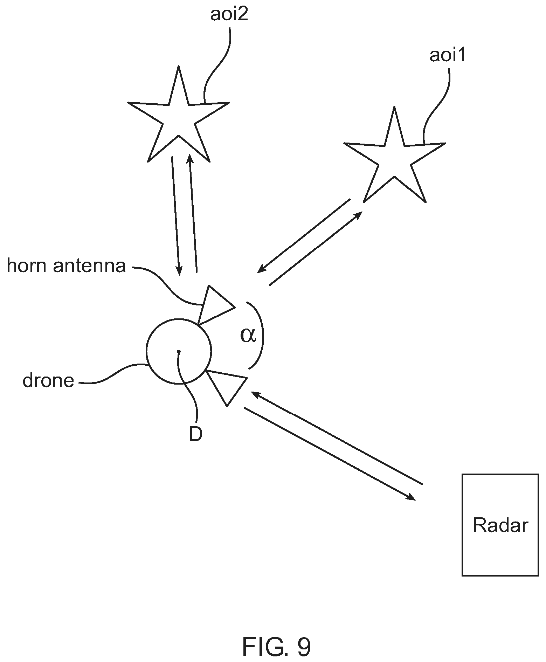

A method for changing the drone's direction, e.g. when a drone has been used to detect targets in a first area of interest, AOI1, and it is now desired to use the same drone to detect targets in a second area of interest, AOI2, is now described with reference to Fig. 9, which shows a drone, receiving from a main radar, whose transmitting antenna is directed or pointed to a former area of interest AOI1, rather than to a new area of interest, AOI2. To correct this, the angle alpha between the two antennas, as marked in Fig. 9, may be computed; this is possible since in the triangle defined by the area of interest's center of mass (first vertex), the main radar (second vertex) and the drone (third vertex), the radar position is known and AOI position (position of AOI's center of mass e.g.) is known. Also, the drone position is selected by system operators (typically depending inter alia on topography) and hence is also known. Thus, the lengths of the triangle's three edges are simply the distances between known locations and from these three lengths, the triangle's three angles, and in particular the marked angle alpha in Fig. 9, may be derived trigonometrically e.g. via the sine theorem relating ratios of a triangle's edges or sides to the sines of its angles, or via the cosine theorem.

Then, to point the drone to point to AOI2 rather than AOI1, the drone may be landed, its antenna e.g. horn antenna as shown in Fig. 9 is reset manually to bring the horn's orientation to angle alpha computed as above for AOI2, and the drone is then returned to the air. Alternatively, the AOI-facing antenna (but not the main radar-facing antenna which receives its energy from the main radar which is typically stationary) may be mounted on a mechanical ring which is automatically rotatable to enable the horn or other AOI-facing antenna to point at another angle (by commanding a controller/processor which controls rotation of the mechanical ring e.g.) without downing the drone.

It is appreciated that, typically, the AOI-facing antenna is static during operation (while an AOI is being protected) and rotates only when a new AOI needs to be accommodated. Also, any implementation may be selected to enable the AOI-facing antenna to move from one AOI to another; mounting the antenna on a rotatable ring is but one possible implementation.

It is appreciated that dot D represents an axis perpendicular to the plane of the page/to the ground and the drone may rotate around this axis.

Alignment or calibration need not necessarily be performed in accordance with the method of Figs. 7a-8; instead or in addition, alignment or calibration may be performed in accordance with any method described in co-owned US1190665 ( https://patents.google.com/patent/US11906653B2/en?oq=israel+263136 ), aka "the Mihlin patent") the disclosure of which is hereby incorporated herein in its entirety. For example, alignment or calibration of the radar antenna mounted on the drone, which constitutes a rotatable support, may include all or any subset of the following operations, suitably ordered e.g. as follows; it is appreciated that the radar antenna is typically mounted at a predetermined position relative to a reference point on the drone:
i. receiving reference data indicative of a position of a target element relative to a reference location, and of a position of the reference point on the rotatable support relative to the reference location;
ii. receiving orientation data indicative of at least one angular position of the rotatable support and antenna measurement data indicative of electromagnetic echo signals received by the radar antenna from the reference target element;
iii. determining a measured position of the target element relative to the radar antenna, based on at least a portion of the antenna measurement data;
iv. determining a reference position of the target element relative to the radar antenna, based on the reference data and on at least a portion of the orientation data; and
v. determining at least one bias value or function associated with at least one of the orientation data or the antenna measurement data, based on a deviation between the determined measured position and reference position of the target element.

The method may, e.g. as described in co-owned US1190665, also include all or any subset of the following operations, suitably ordered e.g. as follows:
rotating the rotatable support into two or more different angular positions;
determining two or more respective orientation data instances for each of the different angular positions of the rotatable support, corresponding two or more measured position instances of the target element based on respective electromagnetic echo signals received by the main radar antenna at the two or more angular positions, and corresponding reference position instances of the target element based on the respective two or more orientation data instances and the reference data; and
determining at least one bias value or function for each of the two or more different angular positions of the rotatable support based on a deviation between the measured position and the determined reference position of the target element determined for each of the two or more different angular positions of the rotatable support.

The method may, e.g. as described in co-owned US1190665, also include applying a curve fitting process based on the deviation between the respective determined measured and reference positions instances of the target element, and deriving the at least one bias value or function therefrom. Any curve fitting process may be used e.g. a least mean squares error minimization process.

The at least one angular position of the rotatable support may, for example, include at least one of the following: a measured azimuth angle of the rotatable support, a measured roll tilt angle of the rotatable support, or a measured pitch tilt angle of the rotatable support.

The method may, e.g. as described in co-owned US1190665, also include determining the reference position of the target element by processing data indicative of the at least one angular position of the rotatable support.

The reference position and measured position of the target element may, e.g. as described in co-owned US1190665, be determined relative to the center of the radar antenna. Determining the reference position of the target element may include determining the position of the center of the radar antenna relative to the reference point of the rotatable support.

The radar antenna may or may not include a phased array antenna, in which case, e.g. as described in co-owned US1190665, the reference position and measured position of the target element may be determined relative to a phase center of the phased array antenna. Determining the reference position of the target element may include determining a position of the phase center of the radar antenna relative to the reference point of the rotatable support. The reference point may be a center of the rotatable support.

Determining of the measured position of the target element may include processing data indicative of the electromagnetic echo signal received from the target element.

Orientation data may include a measured elevation angle of the radar antenna. Determining the reference position of the target element may include determining a position of the center of the radar antenna relative to the reference point of the rotatable support based on the measured elevation angle.

The method may, e.g. as described in co-owned US1190665, include generating the reference data by a surveying system configured to measure polar coordinates of the target element, and of the reference point, relative to the reference location.

In the method of alignment, e.g. as described in co-owned US1190665, the at least one bias value may include at least one of the following: bias of a measured azimuth angle of the rotatable support, bias of a measured elevation angle of the antenna, bias of a measured roll tilt angle of the rotatable support, and bias of a measured pitch tilt angle of the rotatable support.

Many use-cases are possible for the system herein. The system herein, especially if a parabolic antenna is provided, may be useful e.g. for long-range use-cases e.g. surveillance, searching, tracking, weather, air traffic control, maritime radar for detecting ships or aircraft or other threats over long distances, deep-space communication for satellites and space probes, telecommunications use cases where high-gain directional signals are used to communicate with satellites in orbit, low-volume use cases. The system herein, especially if a horn antenna is provided, may also be usefu,1 e.g. for UAVs , for radar calibration and testing, e.g. in antenna testing labs where the main radar is tasked with using a known, controlled radiation pattern for measuring the performance of other antennas or radar systems, airport security systems, microwave communication systems, for point-to-point communication, inter alia. It is appreciated that use of a drone as described herein to transit, at low-cost, from one AOI to another as the area of interest changes over days or weeks, is far less complex and more cost-effective than using phased array antennas, as is conventional.

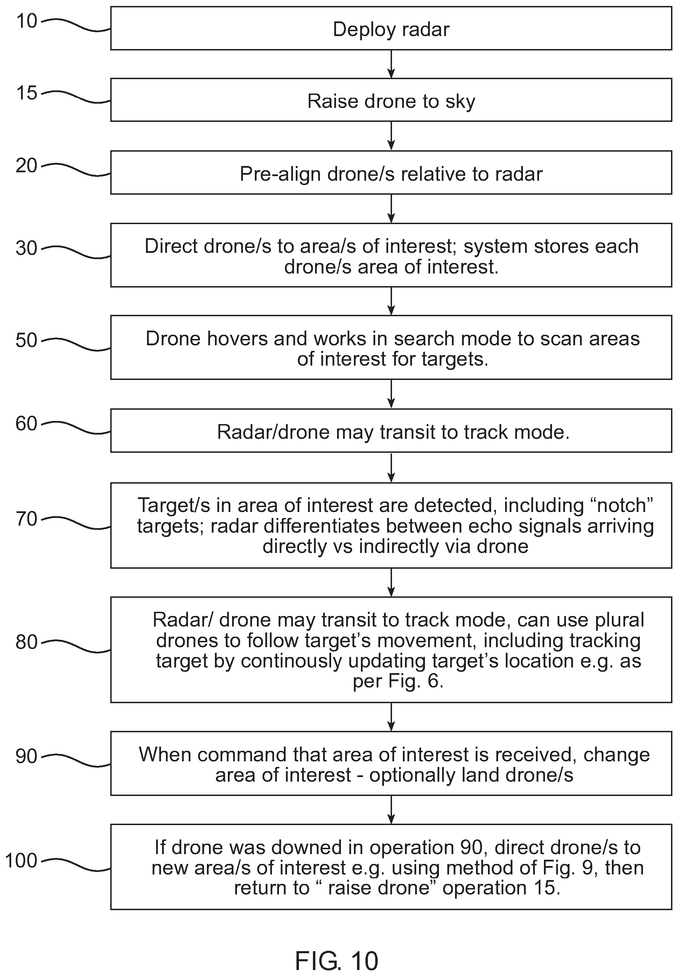

Fig. 10 is a simplified flowchart illustration of a method performed in accordance with certain embodiments of the invention described herein e.g. in conjunction with all or any subset of the embodiments of Fig. 1- 8; all or any subset of the following operations may be performed, in any suitable order e.g. as illustrated:
Operation 10: Deploy radar.
Operation 15: raise drone to sky.
Operation 20: pre-align drone/s relative to radar, e.g. using a theodolite; each drone is configured to detect targets and to report such targets to radar in a manner which enables the radar to know these targets were detected by a drone, and not by radar itself e.g. using solution1 and/or solution2 and/or solution3 described elsewhere herein.
Operation 30: Using drone communication ability if any, direct drone/s to area/s of interest; system stores each drone/s current area of interest. Drone may be directed to a current area of interest manually while still on the ground (before operation 15 e.g.) if drone lacks communication functionality.
Operation 50: drone hovers (for non-GPS drones, adjustments to the throttle, pitch, yaw, and roll may be made by an operator, to ensure the drone holds its position) and works in search mode to scan areas of interest for targets. It is appreciated that when the radar works in search mode, the drone working in cooperation with the radar is also deemed to be working in search mode.
Operation 60: radar and/or drone may transit to track mode . It is appreciated that when the radar works in track mode, the drone working in cooperation with the radar is also deemed to be working in track mode.
Operation 70: (at least one) target in area of interest is found, including any "notch" targets; radar differentiates between echo signals arriving directly from targets on the one hand, and signals arriving via drone/s on the other hand (e.g. using solution1 herein and/or solution2 herein and/or solution3 herein) and, for signals arriving via drone/s, assumes those signals are arriving from a target deployed in a known area of interest of the drone.
Operation 80: radar and/or drone may transit to track mode and may use plural drones (if more than one drone was provided) to follow the target's movement, including repeatedly localizing (each such) target to track target by continuously updating target's location e.g. as per Fig. 6.
Operation 90: land the drone/s for manual readjustment of area of interest e.g. using bezel, each time area of interest changes (unless drone has communication functionality in which case the area of interest may be changed automatically, from the ground, while the drone is in the air).
Operation100: direct drone/s to new area/s of interest e.g. using the method of Fig. 9,.

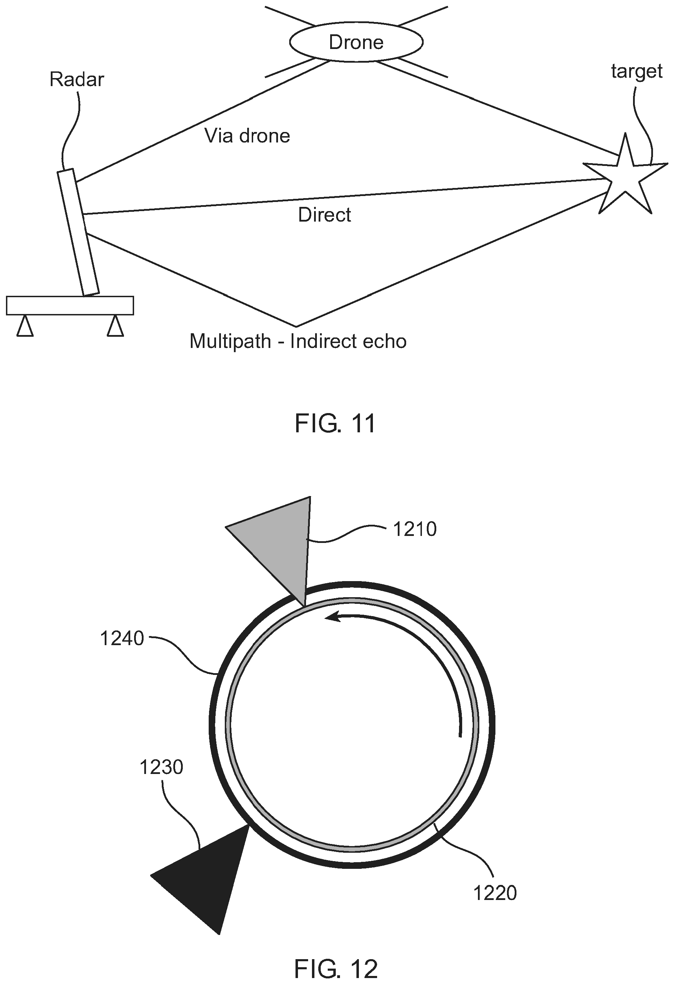

Reference is now made to Fig. 11 which is a simplified pictorial illustration of a system operating in accordance with embodiments of the present invention. Fig. 11 shows an indirect echo (multi-path involving radar signals that bounce off ground/objects as opposed to reaching the target directly). It is appreciated that the system herein copes well with multi-path problems, given that in the geometric location of the drone (which is airborne), there are no multipath signals.

It is appreciated that any suitable main radar may be employed herein, even high-power radar systems used for long-range surveillance and/or early warning such as the AN/TPS-59 radar or other radar, whose peak power is 100 kW, or more, or a few hundred kW, or more, or 1 MW (megawatt), or more.

Fig. 12 is a simplified pictorial illustration of a drone in which, in accordance with embodiments of the present invention, one antenna 1210 can be rotated to various azimuthal positions (e.g. being mounted on a ring 1220 which can be automatically rotated) and/or another antenna 1230 is fixed (e.g. being mounted on a ring 1240 which is fixed). Amplifier/s and/or a component that converts\changes frequency (e.g. means carrier frequency may be provided aboard the drone as described elsewhere herein but are not shown for simplicity.

The AOI-facing antenna 1210 (but not the main radar-facing antenna 1230 which receives its energy from the main radar which is typically stationary) may be mounted on a mechanical ring which is automatically rotatable to enable the horn or other AOI-facing antenna to point at various angles (e.g. by commanding a controller/processor which controls rotation of the mechanical ring) without downing the drone.

The rotatable mechanical ring e.g. bezel, may have markings or graduations or ticks each 1 or 2 or 5 degrees therealong to enable the antenna pointed at the AOI which typically is mounted fixedly on the ring to rotate in a controlled manner, with the ring, to a new AOI whereas the antenna pointed at the main radar, which is not mounted on the rotatable ring, does not.

It is appreciated that mounting of the drone's antennae on ring/s, one fixed and/or one rotatable, e.g. as per the embodiment of Fig. 12, is just one possible implementation of how to program a desired angle for the drone antenna which points at the AOI and, responsively, have that antenna (but not the antenna that fixedly points at the main radar irrespective of the current area of interest) automatically rotate to that position. Any suitable solution that may combine mechanical motion with electronic control may be used alternatively or in combination, such as but not limited to a servo motor which rotates to a specified angle based on signals from a microcontroller, and/or a stepper motor which rotates in small increments, perhaps with a rotary encoder to provide real-time angular position feedback for closed-loop control, ensuring accuracy, and/or a DC motor typically combined with a feedback device (e.g. potentiometer, rotary encoder, or Hall sensor) and/or a harmonic drive gear system driven by a servo motor and/or a linear actuator connected to a lever or gear to generate controlled rotary motion.

The embodiments described herein are merely exemplary; many variations are possible. The main radar's range for various radar cross-sections and for various distances (given drones with similar radar cross-sections) is generally known. The drone's propellers may or may not be exposed. The drone's flat surfaces may or may not face the main radar.

It is appreciated that terminology such as "mandatory", "required", "need" and "must" refer to implementation choices made within the context of a particular implementation or application described herewithin for clarity, and are not intended to be limiting, since, in an alternative implementation, the same elements might be defined as not mandatory and not required, or might even be eliminated altogether.

Components described herein as software may, alternatively, be implemented wholly or partly in hardware and/or firmware, if desired, using conventional techniques, and vice-versa. Each module or component or processor may be centralized in a single physical location or physical device or distributed over several physical locations or physical devices.

Included in the scope of the present disclosure, inter alia, are electromagnetic signals in accordance with the description herein. These may carry computer-readable instructions for performing any or all of the operations of any of the methods shown and described herein, in any suitable order including simultaneous performance of suitable groups of operations, as appropriate. Included in the scope of the present disclosure, inter alia, are machine-readable instructions for performing any or all of the operations of any of the methods shown and described herein, in any suitable order; program storage devices readable by machine, tangibly embodying a program of instructions executable by the machine to perform any or all of the operations of any of the methods shown and described herein, in any suitable order i.e. not necessarily as shown, including performing various operations in parallel or concurrently rather than sequentially as shown; a computer program product comprising a computer useable medium having computer readable program code, such as executable code, having embodied therein, and/or including computer readable program code for performing, any or all of the operations of any of the methods shown and described herein, in any suitable order; any technical effects brought about by any or all of the operations of any of the methods shown and described herein, when performed in any suitable order; any suitable apparatus or device or combination of such, programmed to perform, alone or in combination, any or all of the operations of any of the methods shown and described herein, in any suitable order; electronic devices, each including at least one processor and/or cooperating input device and/or output device and operative to perform, e.g. in software, any operations shown and described herein; information storage devices or physical records, such as disks or hard drives, causing at least one computer or other device to be configured so as to carry out any or all of the operations of any of the methods shown and described herein, in any suitable order; at least one program pre-stored e.g. in memory or on an information network such as the Internet, before or after being downloaded, which embodies any or all of the operations of any of the methods shown and described herein, in any suitable order, and the method of uploading or downloading such, and a system including server/s and/or client/s for using such; at least one processor configured to perform any combination of the described operations or to execute any combination of the described modules; and hardware which performs any or all of the operations of any of the methods shown and described herein, in any suitable order, either alone or in conjunction with software. Any computer-readable or machine-readable media described herein is intended to include non-transitory computer-or machine-readable media.

Any computations or other forms of analysis described herein may be performed by a suitable computerized method. Any operation or functionality described herein may be wholly or partially computer-implemented, e.g. by one or more processors. The invention shown and described herein may include (a) using a computerized method to identify a solution to any of the problems or for any of the objectives described herein, the solution optionally including at least one of a decision, an action, a product, a service, or any other information described herein, that impacts, in a positive manner, a problem or objectives described herein; and (b) outputting the solution.

The system may, if desired, be implemented as a web-based system employing software, computers, routers, and telecommunications equipment, as appropriate.

Any suitable deployment may be employed to provide functionalities, e.g. software functionalities, shown and described herein. For example, a server may store certain applications, for download to clients, which are executed at the client side, the server side serving only as a storehouse. Any or all functionalities, e.g. software functionalities shown and described herein, may be deployed in a cloud environment. Clients, e.g. mobile communication devices such as smartphones, may be operatively associated with, but external to the cloud.

The scope of the present invention is not limited to structures and functions specifically described herein and is also intended to include devices which have the capacity to yield a structure, or perform a function, described herein, such that even though users of the device may not use the capacity, they are, if they so desire, able to modify the device to obtain the structure or function.

Any "if -then" logic described herein is intended to include embodiments in which a processor is programmed to repeatedly determine whether condition x, which is sometimes true and sometimes false, is currently true or false, and to perform y each time x is determined to be true, thereby to yield a processor which performs y at least once, typically on an "if and only if" basis, e.g. triggered only by determinations that x is true, and never by determinations that x is false.

Any determination of a state or condition described herein, and/or other data generated herein, may be harnessed for any suitable technical effect. For example, the determination may be transmitted or fed to any suitable hardware, firmware or software module, which is known or which is described herein, to have capabilities to perform a technical operation responsive to the state or condition. The technical operation may, for example, comprise changing the state or condition, or may more generally cause any outcome which is technically advantageous, given the state or condition or data, and/or may prevent at least one outcome which is disadvantageous, given the state or condition or data. Alternatively, or in addition, an alert may be provided to an appropriate human operator, or to an appropriate external system.

Applicability of the subject matter disclosed herein is not limited to embodiments claimed, nor to solutions for specific disadvantages emphasized herein, nor need any element of any system and method described herein, on its own or in combination with other elements described herein, operate only in environments or use-cases or technology areas such as those described herein.

Features of the present invention, including operations, which are described in the context of separate embodiments, may also be provided in combination in a single embodiment. For example, a system embodiment is intended to include a corresponding process embodiment, and vice versa. Also, each system embodiment is intended to include a server-centered "view" or client centered "view", or "view" from any other node of the system, of the entire functionality of the system, computer-readable medium, apparatus, including only those functionalities performed at that server or client or node. Features may also be combined with features known in the art, and particularly, although not limited to, those described in the Background section or in publications mentioned therein.

Conversely, features of the invention, including operations, which are described for brevity in the context of a single embodiment or in a certain order, may be provided separately or in any suitable sub-combination, including with features known in the art (particularly although not limited to those described in the Background section or in publications mentioned therein) or in a different order. "e.g." is used herein in the sense of a specific example which is not intended to be limiting. Each method may comprise all or any subset of the operations illustrated or described, suitably ordered e.g. as illustrated or described herein.

Devices, apparatus, or systems shown coupled in any of the drawings may in fact be integrated into a single platform in certain embodiments, or may be coupled via any appropriate wired or wireless coupling, such as but not limited to optical fiber, Ethernet, Wireless LAN, HomePNA, power line communication, cell phone, Smart Phone (e.g. iPhone), Tablet, Laptop, PDA, Blackberry GPRS, Satellite including GPS, or other mobile delivery. It is appreciated that in the description and drawings shown and described herein, functionalities described or illustrated as systems and sub-units thereof, can also be provided as methods and operations therewithin, and functionalities described or illustrated as methods and operations therewithin can also be provided as systems and sub-units thereof. The scale used to illustrate various elements in the drawings is merely exemplary and/or appropriate for clarity of presentation, and is not intended to be limiting.

## Claims

1. A radar system comprising:
i. A main radar which transmits a first multiplicity of RF signals which impinge upon targets, if any, and are reflected back to the main radar as a second multiplicity of echo signals;
ii. a controller/processor; and
iii. a hovering or stationary drone, including:
at least one onboard receiving antenna receiving echo signals, from among the second multiplicity of echo signals, which arrive from a direction or area of interest, known to the controller/processor, in which targets are to be detected, and
at least one onboard transmitting antenna
and wherein the controller/processor is configured to determine whether each echo signal received by the main radar arrived from the drone or from a target other than the drone, and wherein, for each echo signal which arrived from the drone, the controller/processor outputs that there is a target in the direction of interest, and for each echo signal which did not arrive from the drone the controller/processor outputs that there is a target at a location computed, e.g. by a radar's legacy signal processing, as a function of the direction the echo signal was received from.

2. The system of claim 1 wherein the main radar is stationary and the drone is airborne and is hovering at a location, relative to the main radar, which is fixed over time.

3. The system of claim 1 wherein the drone comprises a tethered drone which is tethered to a base e.g. ground vehicle, thereby to overcome the drone's otherwise limited flight-time duration.

4. The system of claim 1 wherein the controller/processor processes at least one echo arriving from a "notch" target which is moving tangentially relative to the main radar's line of sight.

5. The system of claim 1 wherein the transmitting antenna comprises one of the following group: mechanically steered antenna e.g. parabolic (dish) antenna, fixed beam antenna e.g. Yagi-Uda antenna (yagi antenna) or horn antenna which may provide a fixed directional beam, a single-element antenna e.g. monopole antenna, dipole antenna, loop antenna; a helical antenna or a log-periodic antenna.

6. The system of claim 1 wherein the antenna receiving the echo signals comprises one of the following group: mechanically steered antenna e.g. parabolic (dish) antenna, fixed beam antenna e.g. Yagi-Uda antenna (yagi antenna) or horn antenna which may provide a fixed directional beam, a single-element antenna e.g. monopole antenna, dipole antenna, loop antenna; a helical antenna or a log-periodic antenna.

7. A cost-effective method for radar operation, the method comprising:
i. providing a main radar which transmits a first multiplicity of RF signals which impinge upon targets, if any, and are reflected back to the main radar as a second multiplicity of echo signals;
ii. providing a hovering drone e including:
at least one onboard receiving antenna receiving echo signals, from among the second multiplicity of echo signals, which arrive from a direction of interest, known to the controller/processor in which targets are to be detected, wherein the direction of interest is known to the main radar; and
at least one onboard transmitting antenna (which may be directed at the main radar);
and
iii. providing a controller/processor configured to determine whether each echo signal received by the main radar arrived from the drone or from a target other than the drone, and wherein, for each echo signal which arrived from the drone the controller/processor outputs that there is a target in the direction of interest, and for each echo signal which did not arrive from the drone the controller/processor outputs that there is a target at a location computed, e.g. by a radar's legacy signal processing, as a function of the direction from which the echo signal was received.

8. The method of claim 7 and also comprising transitioning from a first area of interest to be monitored, to a second area of interest to be monitored, by commanding the drone to rotate about its axis.

9. A computer program product, comprising a non-transitory tangible computer readable medium having computer readable program code embodied therein, the computer readable program code adapted to be executed to implement a cost-effective method for radar operation, the method comprising:
i. providing a main radar which transmits a first multiplicity of RF signals which impinge upon targets, if any, and are reflected back to the main radar as a second multiplicity of echo signals;
ii. providing a hovering drone e including:
at least one onboard receiving antenna receiving echo signals, from among the second multiplicity of echo signals, which arrive from a direction of interest, known to the controller/processor in which targets are to be detected, wherein the direction of interest is known to the main radar;
at least one onboard transmitting antenna directed at the main radar; and
iii. providing a controller/processor configured to determine whether each echo signal received by the main radar arrived from the drone or from a target other than the drone, and wherein, for each echo signal which arrived from the drone the controller/processor outputs that there is a target in the direction of interest, and for each echo signal which did not arrive from the drone the controller/processor outputs that there is a target at a location computed, e.g. by a radar's legacy signal processing, as a function of the direction from which the echo signal was received.
